Europäisches Patentamt

European Patent Office

Office européen des brevets

(11) Numéro de publication: **0 172 098**

**A1**

(12) # DEMANDE DE BREVET EUROPEEN

(21) Numéro de dépôt: 85401565.8

(22) Date de dépôt: 31.07.85

(51) Int. Cl.⁴: **B 29 C 53/58**

(30) Priorité: 10.08.84 FR 8412674

(43) Date de publication de la demande:
19.02.86 Bulletin 86/8

(84) Etats contractants désignés:
DE GB IT

(71) Demandeur: **COMMISSARIAT A L'ENERGIE ATOMIQUE**
**Etablissement de Caractère Scientifique Technique et**
**Industriel**
**31/33, rue de la Fédération**
**F-75015 Paris(FR)**

(72) Inventeur: **Hervigot, Michel**
**3, rue des Bois Sainte-Mesme**
**F-78730 Saint Arnoult en Yvelines(FR)**

(72) Inventeur: **Ozanne, Jean**
**11, rue des Tulipes**
**F-91390 Morsang Sur Orge(FR)**

(74) Mandataire: **Mongrédien, André et al,**
**c/o BREVATOME 25, rue de Ponthieu**
**F-75008 Paris(FR)**

(54) **Procédé de fabrication d'un matériau composite, armé de fibres orthogonales, de forme annulaire.**

(57) Procédé de fabrication d'un matériau composite armé de forme annulaire.

Ce procédé se caractérise en ce qu'on réalise sur une enceinte ou un mandrin (1) de forme annulaire, notamment torique, deux bobinages simultanés selon deux directions orthogonales, à savoir respectivement un bobinage circonférentiel (6) selon les grands cercles du tore et un bobinage torique selon les petits cercles du tore, de deux familles de fibres, d'un matériau choisi parmi les aramides, le verre et le graphite, puis en ce que l'on réalise ensuite une imprégnation, à chaud sous vide, par une matrice appropriée de bobinage ainsi obtenu suivie d'une polymérisation de cette matrice.

FIG.1

EP 0 172 098 A1

## Procédé de fabrication d'un matériau composite, armé de fibres orthogonales, de forme annulaire.

La présente invention a pour objet un procédé de bobinage permettant de réaliser sur une enceinte ou un mandrin de forme torique ou annulaire, deux bobinages simultanément selon deux directions orthogonales : une première famille de fibres est enroulée selon un bobinage dit circonférentiel suivant les grands cercles du tore ; une deuxième famille de fibres est bobinée simultanément selon un bobinage dit torique suivant les petits cercles de ce même tore.

Le procédé s'applique plus précisément, soit au frettage d'une capacité de forme torique, soit à l'élaboration directe d'un composite à partir d'un mandrin éliminable, par exemple par fusion, lorsque le composite, ayant été imprégné et polymérisé ou vulcanisé, a acquis sa rigidité et sa solidité définitives.

Elle permet notamment l'utilisation de fibres continues de matériaux très variés tels que, par exemple, des fibres d'aramides, de verre ou de graphite, ou des fibres textiles ou métalliques.

On connaît déjà, dans l'industrie électrique américaine, un procédé de bobinage torique utilisant un fil de cuivre émaillé que l'on met en place sur un support de forme annulaire. Toutefois, ce bobinage est uniquement unidirectionnel, c'est-à-dire en l'occurrence selon les petits cercles du tore et d'autre part, ce bobinage est obtenu à l'aide d'une navette annulaire ouvrante et rechargeable dont la tension du fil au fur et à mesure de son déroulement est assurée par friction de ce dernier, ce qui serait inacceptable par exemple dans le cas de fibres de très petit diamètre et très fragiles.

La présente invention a précisément pour objet un procédé de fabrication d'un matériau composite

B 8036.3 AM

armé de forme annulaire, caractérisé en ce que l'on réalise sur une enceinte ou un mandrin de forme annulaire, notamment torique, deux bobinages simultanés selon deux directions orthogonales, à savoir respectivement un bobinage circonférentiel selon les grands cercles du tore et un bobinage torique selon les petits cercles du tore, de deux familles de fibres puis en ce que l'on réalise ensuite une imprégnation à chaud sous vide par une résine (ou tout autre imprégnant) du bobinage ainsi obtenu suivie d'une polymérisation de la résine ou solidification de l'imprégnant ou encore d'une vulcanisation.

Comme on le voit et conformément à l'invention, la caractéristique essentielle du procédé de fabrication d'un matériau composite bidirectionnel réside dans le fait de pratiquer sur un mandrin torique simultanément deux bobinages selon des directions orthogonales. Cette particularité permet de produire un matériau composite armé de forme annulaire ayant toute épaisseur désirée en fonction des utilisations que l'on souhaite en faire.

Le procédé permet notamment l'emploi de fibres très fragiles grâce notamment au guidage du fil par des surfaces roulantes et à la régulation de la tension de ce dernier par action indirecte sur les bobines de dévidage. Cette façon de procéder permet de conserver les propriétés originelles du matériau constituant les fibres dans des composites à haute performance.

Selon une caractéristique essentielle de la présente invention, le bobinage torique ainsi obtenu est disposé selon deux dimensions orthogonales, l'une dite circonférentielle suivant les grands cercles du tore et l'autre dite torique suivant ces petits cercles. Les deux bobinages précédents interagissent entre eux, le second assurant le maintien en place du premier, en s'opposant notamment au glissement de l'enroulement circonférentiel sur la surface latérale du tore. Chaque enroulement assume séparément la prise en charge de ses contraintes propres lorsque le matériau composite final subit, au cours de son utilisation, des contraintes de natures diverses et notamment des surpressions internes élevées.

Par ailleurs, la souplesse de répartition de la nappe de fils circonférentiels permet d'affiner la prise en charge des contraintes mécaniques par répartition de l'armature du composite puisqu'on peut réaliser par le procédé de bobinage, objet de l'invention, une répartition des armatures à la demande, en fonction, dans chaque cas particulier, des contraintes que devra absorber le matériau composite armé terminé. On peut notamment ainsi, en cours de bobinage, rééquilibrer l'épaisseur du matériau composite pour lui donner une valeur constante ou au contraire apporter, par surépaisseur une couche ablattable utile dans certaines applications.

D'autres particularités géométriques du bobinage obtenu sont intéressantes à noter et notamment le fait que le bobinage torique délivre grâce à la navette ouvrante le même nombre de fibres tout autour des cercles de petit diamètre du tore et détermine par conséquent une variation d'épaisseur des enroulements toriques entre la zone externe et la zone interne qui est inversement proportionnelle au rapport des grands diamètres externe et interne du tore. Cette particularité laisse place à l'armature circonférentielle plus utile sur l'extérieur du tore, tout en rétablissant une constance de l'épaisseur finale ; celle-ci peut être corrigée comme il vient d'être expliqué précédemment en cas de besoin pour certaines applications particulières

B 8036.3 AM

Les mèches de la première famille de fils destinées à l'enroulement de la nappe circonférentielle sont amenées au travers de guide-fils d'un type classique sous une tension constante pour chacune d'elles et préréglée à une valeur désirée. Les systèmes de répartition et d'alimentation de ces mèches sous tension sont bien connus de l'homme de l'art et, ne faisant pas partie de l'invention, ne sont donc pas décrits dans la présente demande. Les fils de cette première famille de mèches sont amenés tangentiellement aux grands cercles externes du mandrin torique lequel tournant autour de son axe provoque ainsi leur enroulement progressif selon une vitesse programmée à l'avance.

La navette ouvrante de forme circulaire qui entoure le mandrin torique contient un certain nombre de bobines constituant la réserve de la deuxième famille de mèches de fils et c'est par rotation autour de son axe qu'elle enroule ainsi cette deuxième famille de mèches sur le mandrin de forme torique selon des petits cercles du tore. Les fils sont libres sur les bobines mais celles-ci possèdent chacune un système d'autofreinage régulé par la réaction de la poulie guide-fils qui assure, lors du déroulement du fil une tension constante de celui-ci. On évite ainsi à la fois les risques de rupture par surtension ou une tension insuffisante source de glissement de la nappe orthogonale ou d'effet de matelassage lors d'un bobinage plus énergique des couches ultérieures.

Selon l'invention, le mandrin recouvert de fibres toriques est mû en rotation par un jeu de trois galets diabolo déterminant des profils en V ouverts à angle droit et assurant un mouvement tangentiel perpendiculaire aux fibres ; leur constitution en élastomère assure un contact large respectant l'intégrité des

fibres. La même matière constitue les galets à joues d'entraînement de la navette et assure dans ce cas un bon frottement d'entraînement du fil sans pour autant provoquer une usure anormale ou des risques de cassure. Ces diabolos ou galets d'entraînement sont mus par un motoréducteur à variateur d'un type classique en soi connu.

L'invention trouve de nombreuses applications dans des domaines de natures diverses et l'on peut citer notamment la fabrication de réservoirs souples ou rigides destinés à contenir des fluides liquides ou gazeux sous pression. Elle peut encore être utilisée avec toute satisfaction pour réaliser des enceintes sous vide d'appareils accélérateurs, notamment du type cyclotron. Des modes de réalisation plus particuliers, dans lesquels le matériau composite armé conserverait une certaine souplesse, pourraient être utilisés sous pression comme pneumatiques à haute performance, par exemple pour les trains d'atterrissage d'avions. Dans ce cas, il peut être intéressant de réaliser le matériau composite armé en accroissant volontairement la nappe de fils circonférentiels de façon à réaliser ainsi une couche externe ablattable qui serait consommée au fur et à mesure de l'usure du pneu.

Dans le cas où le matériau composite, objet de l'invention, est utilisé pour des enceintes sous vide ou devant contenir des liquides ou des gaz sous pression, l'enceinte ou mandrin torique d'origine doit être évidemment munie d'une ouverture en forme de queusot comprenant éventuellement une valve. Dans ce cas, si le queusot est situé hors d'une zone d'enroulement circonférentiel, il évite des suggestions de contournement par ces fibres. Par contre la séparation-répartition des fibres toriques de part et d'autre du queusot s'automatise en coiffant le queusot d'une ogive.

L'étape d'imprégnation à chaud de préférence sous vide de l'armature du composite à l'aide d'une résine ou d'un imprégnant convenable, suivie d'une polymérisation de cette résine, est en soi d'un type parfaitement classique et ne fera donc l'objet d'aucune description particulière dans la présente demande. Il faut tout de même tenir compte de la compatibilité thermique entre seuil de polymérisation ou de vulcanisation de la matrice et fusion du mandrin dans le cas où ce dernier doit être évacué par fusion. En effet, le traitement thermique de la matrice (par exemple polymérisation ou vulcanisation) ne doit pas endommager le mandrin fusible et, réciproquement, la matrice doit résister à la température nécessaire à la fusion du mandrin dans le cas où ce dernier est éliminé par fusion.

De toute façon, l'invention sera mieux comprise à la lecture de la description qui suit d'exemples de réalisation d'un matériau composite armé, exemples qui seront donnés à titre surtout illustratif et non limitatif en se référant aux figures 1 à 4 sur lesquelles :

- la figure 1 est un schéma théorique qui montre dans l'espace la façon dont sont pratiqués les deux bobinages orthogonaux caractéristiques de l'invention,

- la figure 2 montre en coupe selon un plan diamétral du matériau composite annulaire, une constitution possible d'un tel composite;

- la figure 3 montre une vue d'ensemble d'un appareil de bobinage mettant en oeuvre le procédé,

- la figure 4 montre en coupe selon XY de la figure 3, certains détails de ce même appareil.

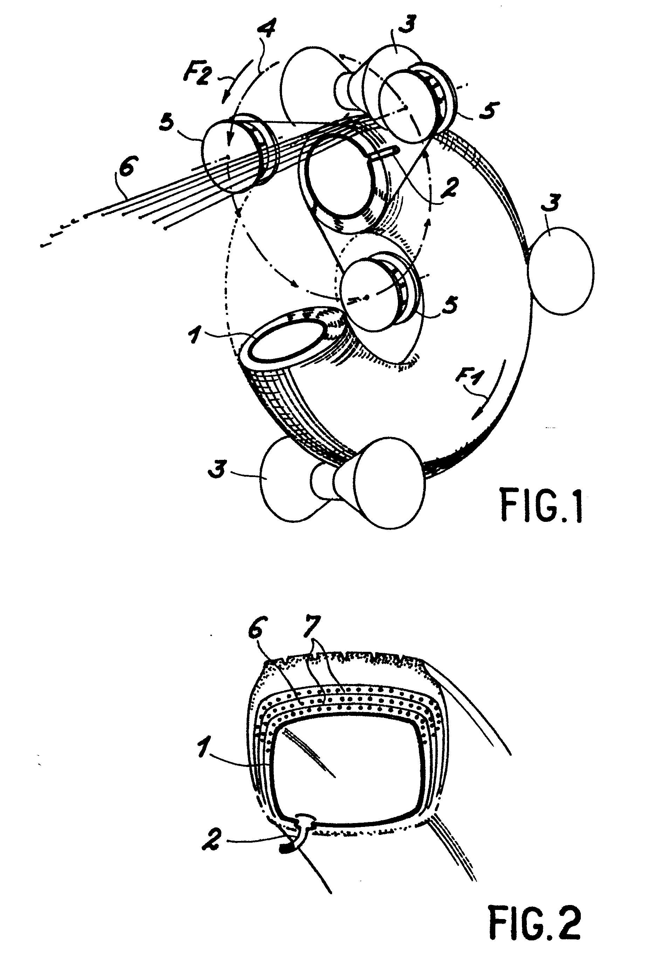

Sur la figure 1, on a représenté, sous forme partiellement sectionnée, l'enceinte ou mandrin de forme annulaire 1 comportant dans l'exemple décrit un conduit 2 de communication avec l'intérieur. Ce mandrin annulaire 1 est maintenu en position par un certain nombre de galets 3, ici au nombre de trois, qui ont un profil en diabolo et servent à la fois à maintenir le mandrin 1 dans l'espace et à le mettre en rotation autour de son axe suivant la direction de la flèche F1. Sur cette même figure, on voit, représentée très schématiquement en pointillés, la navette ouvrante circulaire 4 munie des trois bobines de fils 5. Cette navette ouvrante 4 est mue en rotation autour de son axe par des galets non représentés sur la figure 1 selon la direction de la flèche F2.

Une première famille de fibres 6 arrivant sous tension constante est ainsi enroulée circonférentiellement le long de l'enceinte ou du mandrin 1 du fait de la rotation de celui-ci ; simultanément, la rotation de la navette ouvrante 4 permet le déroulement progressif de la deuxième famille de fibres stockées sur les bobines 5, qui vient ainsi se superposer orthogonalement à la première en s'enroulant autour des petits cercles du tore de l'enceinte-mandrin 1, constituant ainsi le deuxième enroulement du matériau composite en cours d'élaboration. Cet enroulement sert en quelque sorte de frettage à l'enroulement de la première famille.

Sur la figure 2, on a montré en coupe un composite de forme annulaire à section droite rectangulaire et sur lequel on voit à la fois l'enceinte-mandrin de démarrage 1 et les différentes couches de bobinage orthogonaux 6 et 7 constituant l'armature proprement dite du matériau composite armé. Le conduit 2 relie l'intérieur et l'extérieur du composite en traversant les couches de bobinage. On conçoit facilement qu'un tel matériau une fois imprégné et polymérisé ou vulca-

B 8036.3 AM

nisé puisse avoir une résistance mécanique à l'écrasement ou à la pression interne particulièrement élevée.

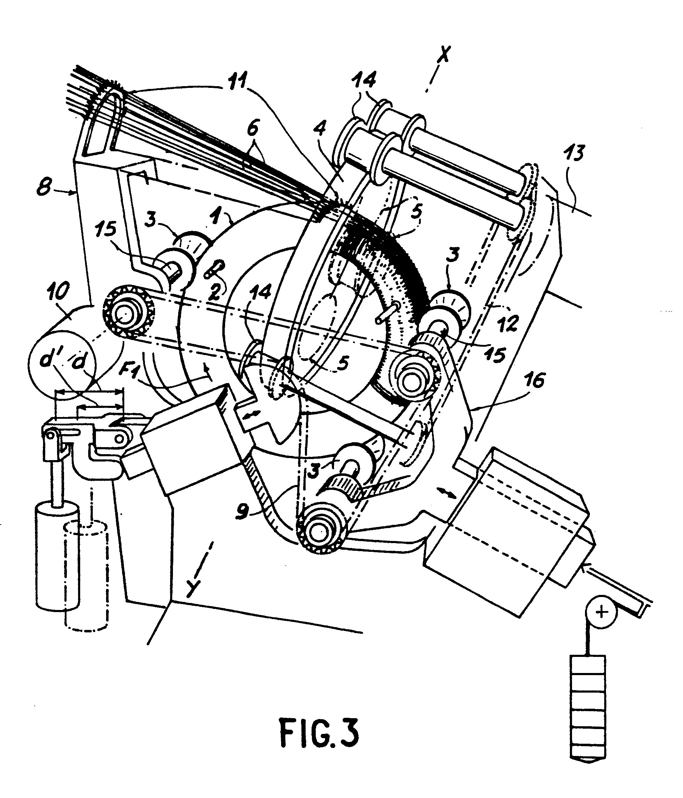

Sur la figure 3, qui montre une vue générale de l'appareil de bobinage simultané des deux familles de mèches de fils précédentes, on voit un bâti 8 supportant à la fois les trois galets en diabolo 3 qui maintiennent le mandrin torique 1 en assurant sa rotation dans le sens de la flèche F1. Ces trois diabolos 3 qui sont de préférence en élastomère sont solidaires en rotation à l'aide d'une chaine de transmission 9 passant sur des pignons et mise en rotation à l'aide du motoréducteur 10 qui comporte, bien entendu, des moyens de réglage de la vitesse de défilement de la chaîne 9 en fonction des impératifs de la fabrication. La régulation de la pression de contact des trois diabolos est un élément essentiel dans la qualité du produit bobiné, leurs positions relatives doivent admettre l'expansion de la pièce en cours de bobinage. Le dispositif d'entraînement simultané des trois galets doit suivre leur écartement. La première nappe ou famille de fibres 6 est visible au sommet de la figure et arrive au travers d'un guide fils 11 d'un type en soi connu sous une tension constante pour être enroulée circonférentiellement sur le mandrin annulaire 1. L'appareil contient également une navette ouvrante 4 dont on voit sur la figure les galets de maintien dans l'espace et d'entraînement 14 ici au nombre de quatre, tous mis simultanément en rotation à l'aide d'une chaîne d'entraînement 12 mue par un motoréducteur 13. Cette navette ouvrante 4 est disposée dans l'espace de façon à être située et maintenue dans un plan diamétral du mandrin torique 1. Elle supporte les bobines 5 contenant la deuxième famille de fibres. Pour plus de clarté, ces bobines 5 n'ont été que suggérées en traits mixtes sur la figure 3. Leur freinage autorégulé permet néanmoins, selon l'invention, l'enroulement à tension constante selon des petits cercles du mandrin torique 1 de la deuxième famille de fibres.

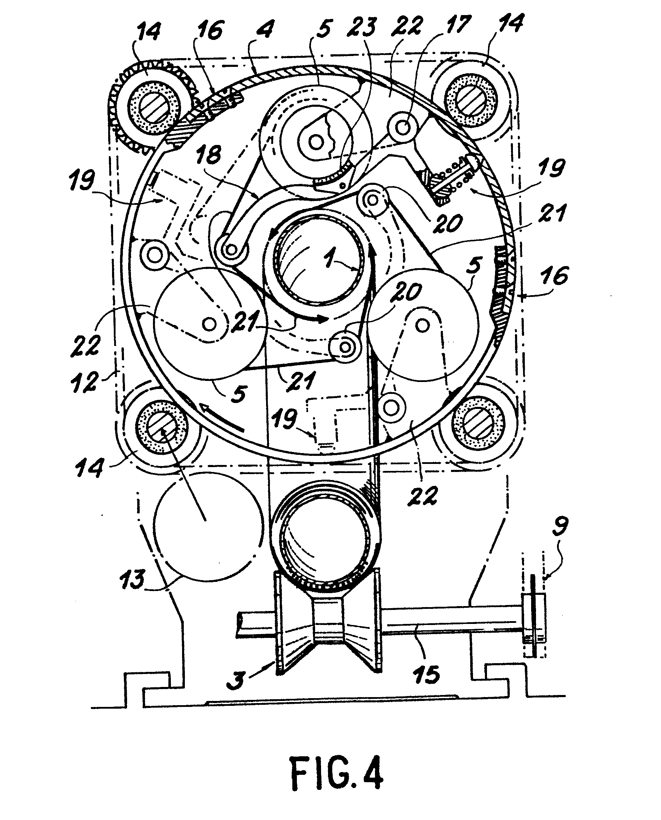

La figure 4 qui est une coupe selon XY de la figure 3, c'est-à-dire dans le plan de la navette ouvrante 4, permet de comprendre plus en détail notamment le système d'autoréduction du freinage des bobines 5 qui distribue la deuxième famille de fibres destinées à être enroulées selon des petits cercles du mandrin torique 1. Sur cette figure 4, on voit l'un des diabolos 3 de maintien et de mise en rotation du mandrin torique 1 par l'intermédiaire de l'arbre 15 et de la chaîne 9 ; on voit également les quatre galets à joues 14 d'entrainement de la navette ouvrante 4 mus par la chaîne de transmission 12 et le motoréducteur à variateur 13. Bien entendu, la navette ouvrante 4 possède une possibilité d'ouverture schématisée en 16 et qui permet de l'insérer autour du mandrin torique 1 sur lequel on veut bobiner les deux familles orthogonales de fibres.

La figure 4 permet surtout de comprendre la disposition et les mécanismes de freinage autorégulé des trois bobines 5 d'alimentation en fils du bobinage dit torique. Ces trois bobines 5 sont montées sur des porte-bobines 22 fixés sur la navette ouvrante 4. Sur le porte-bobine 22 de chacune d'entre elles est articulé, autour d'un axe 17, un levier 18 de forme coudée et comportant à une de ses extrémités, une pompe à ressort réglable 19 et à l'autre extrémité une poulie à gorge 20 guidant le dévidement du fil 21 et réagissant sous la tension de ce fil pour réduire l'action du ressort 19 tout en disposant la deuxième famille de fibres dites "torique". Ce levier coudé 18 chevauche la gorge de la bobine 5 pour y maintenir dans l'axe la poulie guide 20, il porte sur sa partie latérale à la bobine un patin de friction 23 exerçant l'action de freinage sur

la jante de la bobine 5.

Le fonctionnement de cette structure est le suivant, lors du déroulement de la deuxième famille de fils dite "torique", le rayon de déroulement sur la bobine 5 se réduit ; si le couple de freinage de 19 sur 18 restait constant la tension du fil 21 croîtrait en proportion inverse du rayon de dévidage. L'autorégulation du freinage naît du couple antagoniste au freinage créé par la tension du fil sur la poulie 20, qui est elle-même sollicitée à se rapprocher du mandrin 1, ce qui comprime le ressort 19 et permet au levier 18 d'exercer un allègement de la fonction de freinage du patin 23 sur la bobine 5. On garantit de cette façon une avance correcte du fil 21 sous une tension constante.

Le procédé objet de l'invention permet ainsi d'obtenir des composites qui, en fonction du choix de leur nature, sont soit conducteurs électriques, soit isolants ; ces particularités sont intéressantes, notamment dans le domaine du génie nucléaire ou de décharge statique sur avions.

Il est important de noter enfin que lorsque les deux bobinages orthogonaux précédents sont réalisés à l'aide de fibres de carbone ou de verre, c'est-à-dire de matériaux producteurs de poussières dangereuses pour les bronches des utilisateurs, il est judicieux de prévoir des protections du personnel telles que par exemple des aspirateurs situés aux points de fatigue de la fibre mise en oeuvre. C'est notamment le cas au niveau des peignes, des poulies guides, des bobines de navette et, de toute façon, un contrôle permanent de la qualité de l'atmosphère dans laquelle travaille le personnel est éminemment souhaitable.

## REVENDICATIONS

1. Procédé de fabrication d'un matériau composite armé de forme annulaire, comportant un bobinage de fibres soumis ultérieurement à une imprégnation à chaud sous vide par une résine époxy ou autre matrice appropriée du bobinage, suivie d'une polymérisation de cette résine ou vulcanisation ou durcissement de ladite matrice, caractérisé en ce que l'on réalise sur une enceinte ou un mandrin (1) de forme annulaire, notamment torique, deux bobinages simultanés selon deux directions orthogonales, à savoir respectivement un bobinage circonférentiel (6) selon les grands cercles du tore et un bobinage torique selon les petits cercles du tore, de deux familles de fibres.

B 8036.3 AM

FIG.1

FIG.2

FIG.3

**FIG.4**

Office européen
des brevets

**RAPPORT DE RECHERCHE EUROPEENNE**

**0172098**
Numero de la demande

EP  85 40 1565

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl 4) |
|---|---|---|---|
| X | GB-A-2 110 566 (MESSERSCHMITT-BÖLKOW) * Abrégé; page 1, lignes 77-89; figures 1,3 * . | 1 | B 29 C 53/58 |
| X | US-A-3 776 792 (GRAWEY) * Colonne 6, lignes 30-48; colonne 9, lignes 2-31; figures 1,3,5,6 * | 1 | |
| X | FR-A-2 225 372 (CATERPILLAR) * Page 1, lignes 1-4; page 9, lignes 1-9,20-25; figure 1 * | 1 | |

**DOMAINES TECHNIQUES RECHERCHES (Int. Cl.4)**

B 29 C
B 65 H
B 29 D

Le présent rapport de recherche a été établi pour toutes les revendications

| Lieu de la recherche | Date d'achèvement de la recherche | Examinateur |
|---|---|---|
| LA HAYE | 18-10-1985 | KUHN E.F.E. |